# EUROPEAN PATENT APPLICATION

(11) **EP 4 404 632 A1**
(43) Date of publication of application: **24.07.2024**
(21) Application number: 23152665.8
(22) Date of filing: 20.01.2023
(51) Int. Cl.: H04W 40/12, H04W 24/02, H04W 40/16, H04W 40/20

(54) **PATH PLANNING FOR A UE IN RADIO COMMUNICATION NETWORKS**

(71) Applicant: Siemens Aktiengesellschaft, 80333 München (DE)
(72) Inventor: Martinez Alba, Alberto, 81379 München (DE); Richerzhagen, Björn, 85055 Ingolstadt (DE); Richter, Siegfried, 91207 Lauf (DE)
(74) Representative: Siemens Patent Attorneys

(57) **Abstract**

A method of path planning for a user equipment, UE (6), preferably an automated guided vehicle, comprising the steps of: determining, e.g., by a radio access network monitoring function (1), at least one quality of service, QoS, indicator (2) relating to a radio communication of the UE, preferably an interference indicator, based on settings of a plurality of base stations (3) serving adjacent cells (4) of the radio access network (5), e.g., along a possible path of the UE (6) within a coverage area of the radio access network, and determining, e.g., by a path planning function in the UE (6) and/or operatively coupled to the radio access network (5) and/or a core network (7), a path within a coverage area of the radio access network for the UE (6) based on the QoS indicator (2).

## Description

### TECHNICAL FIELD

Embodiments herein relate to methods and devices in a radio communication network. In particular, embodiments herein relate to travelling along a path using the radio communications network.

### BACKGROUND

6G industrial use cases can be extremely demanding in terms of required latency and reliability for mission-critical services (like industrial ethernet over the air). At the same time, the use cases can require other services, such as extremely high-quality video, augmented reality (AR) / virtual reality (VR), which need very high bitrates and bandwidths. These diverse demands also vary a lot based on the time and location, depending on the location of stationary and mobile obstacles. On the other hand, 6G will offer high amount of new spectrum (for example sub-THz) on top of the old spectrum. To handle all this, resources should be allocated very flexibly in temporal, frequency and spatial domains.

For example, one production cell in a factory can have very high connectivity demands while the neighbouring production cell does not. Furthermore, the User Equipments, UEs, are often moving: in a factory environment there are often moving machines like AGVs requiring connectivity. Other examples include slowly moving production cells in automotive manufacturing industry, drones and Unmanned Aerial Vehicles (UAVs) in various use cases, or wireless cargo handling vehicles in port automation.

In 6G, the energy efficiency is seen as a target itself, the whole end-to-end network energy consumption has to be reduced and even performance can be sacrificed in order to save energy. Thus, UE location information may be utilized and anticipated trajectories to flexibly allocate resources in challenging industrial environments. One key enabler for this is a use case where the UEs are not associated with humans but with machines. This enables much greater (even full) predictability of user location and mobility, and we can use mobility to our advantage. However, the same - typically AI enabled - mechanisms used for predicting the UE movement will also be able to identify not yet known movement pattern or anomalies in movements that can indicate accidents or even malicious manipulation of systems.

When a controlled environment is given, it is possible to know exactly where the UEs are and also in many cases where they will be in the near future. As an example, AGVs moving on factory floor are typically using fixed paths and their paths are planned in advance (at least within some time window in the near future). Thus, we can know where all the UEs are at certain time in the near future (e.g., after 5 seconds). This enables controlling tasks pro-actively and in an anticipatory manner, so for example in case of Ultra Reliable Low Latency Communications (URLLC), it is not necessary to wait for errors to happen (even 1 or two errors can be critical, and there may not be a delay budget for retransmissions) but one can for example allocate more or better radio resources (time/frequency channels, beams, different frequency band etc.) in advance before errors happen.

There are also other new degrees of freedom to control the mobility. For example, a moving AGV or drone may take a different route with the same destination, for example owing to changes in the environment, radio propagation conditions, position of other vehicles, etc. It should be understood that path, route and trajectory are used interchangeably herein. Even if the new route were longer, it would be possible to satisfy some requirements better when using the new route. For example, it is possible to reach the reliability and/or latency target since the new route has much better Signal-to-Interference-plus-Noise Ratio (SINR) compared to the shortest default path. Or it is possible to have much shorter file transfer rates with the new route since we can connect to a very high-capacity sub-THz access point along our new route. Still further, energy may be saved by being able to reduce the transmission power of involved devices (of course, the re-routing could then mean that more energy is consumed for mobility). Further, it is possible to trade off performance with energy efficiency by choosing our optimization criteria.

With controlled machine-type mobility, where UEs may be associated with AGVs or drones/UAVs, it is possible to plan the routes of the UEs based on the desired optimization criteria, for example total aggregated throughput, latency, reliability etc., as suggested in D7.2 of Hexa-X. It is also possible to predict the interaction of the moving UE with other users in the network in terms of generated interference, radio resource consumption etc. The whole network operation can be jointly optimized based on selected criteria and selected boundary conditions.

### SUMMARY

It is thus proposed to further improve the path planning for a user equipment.

According to a first aspect a method of path planning for a user equipment, UE, preferably an automated guided vehicle, is proposed. The method comprising the step of determining, e.g., by a radio access network monitoring function, at least one quality of service, QoS, indicator relating to a radio communication of the UE, preferably an interference indicator, based on settings of a plurality of base stations serving adjacent cells of the radio access network, e.g., along a possible path of the UE within a coverage area of the radio access network. The method may further comprise the step of determining, e.g., by a path planning function in the UE and/or operatively coupled to the radio access network and/or a core network, a path within a coverage area of the radio access network for the UE based on the QoS indicator.

According to a second aspect a radio access network apparatus operative to perform the method steps according to the first aspect is proposed.

According to a third aspect a method of path planning for a user equipment, UE, preferably an automated guided vehicle, is proposed. The method comprising the step of comprising the step of obtaining, by the UE, a path planning response comprising the at least one QoS indicator from the radio access network, wherein the QoS indicator is determined, e.g., by a radio access network monitoring function, based on settings of a plurality of base stations, such as a functional split of one or more base stations, serving one or more cells along a possible path of the UE.

According to a fourth aspect a user equipment, UE, operative to perform the method steps according to the third aspect is proposed.

According to a fifth aspect a system comprising a radio access network apparatus according to the second aspect and user equipment according to the fourth aspect is proposed.

According to a sixth aspect a computer program, preferably stored on a non-transitory medium, that comprises program code that when executed, e.g., by a processor, performs the method steps of the first aspect and/or the third aspect is proposed.

### BRIEF DESCRIPTION OF THE DRAWINGS

- Figure 1: illustrates a plurality of functional split options for a mobile network.
- Figure 2: illustrates a coverage area of a radio access network implementing different functional split options and an user, equipment, UE, that intends to traverse.
- Figure 3: illustrates of a path calculated by the UE based on a plurality of service indicators at the cell edges.
- Figure 4: illustrates of a path calculated in a radio access network based on a path finding algorithm.
- Figure 5: illustrates an exemplary architecture of the radio access network comprising a radio access network monitoring function deployed at the same data center as a central unit of a base station.
- Figure 6: illustrates a message sequence between a UE, a distributed unit and the radio access network monitoring function.
- Figure 7: illustrates cell boundaries modeled as polygonal lines.
- Figure 8: illustrates a content of a path planning response message.
- Figure 9: illustrates further contents of a path planning response message.
- Figure 10: illustrates a flow diagram of the operation of the radio access network monitoring function.
- Figure 11: illustrates a flow diagram of the operation of the UE for determining a path.
- Figures 12: to 20 illustrate exemplary method steps according to the present disclosure.

### DETAILED DESCIRPTION

Autonomous or semi-autonomous vehicles are a very promising option to provide a wide range of services, such as city monitoring, packet delivery, efficient human transportation, communication relays, etc. Frequently these vehicles require good communication links to their ground stations or between themselves while they drive or fly, which can be in principle accomplished by radio access networks as part of the vehicle-to-everything (V2X) perspective. In any case, the present disclosure also applies to a user equipment, UE, which may for example be attached to an autonomous or semi-autonomous vehicle, an automated guided vehicle, AGV, and/ or robot.

Radio coverage in the inner region of the traversed cells often allows for good-quality connections (high data rates, low latency, low packet-loss probability), which may be represented by a quality of service indicator. Conversely, at the cell edges inter-cell interference may negatively affect connection quality. Cell coordination is an effective way to reduce inter-cell interference at the cell edge, especially in networks with high frequency reuse factors. Nevertheless, the effectiveness of cell coordination is heavily influenced by the centralization level of the protocol stack of the coordinating cells. When the processing of two cells is highly centralized, sophisticated interference mitigation methods can be used, such as coordinated multipoint or joint transmission and reception. If at least one of the cells is not centralized, however, coordination is hindered.

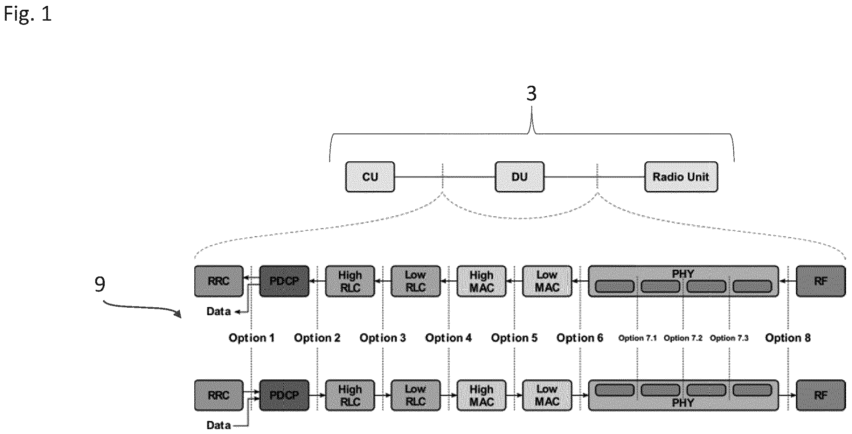

The centralization level of a base station is determined by its functional split, which divides the processing functions between those running at the distributed unit, DU, and those running at the centralized unit, CU, as shown in Figure 1. The functional split affects the ability of applying interference mitigation techniques between neighbor cells. High centralization levels, such as C-RAN (shown as option 8 in Figure 1) or Intra-PHY (options 7.x) enable advanced interference cancellation techniques, such as joint transmission and reception. Less centralized options, such as MAC-PHY (option 6), still allow for less sophisticated techniques, like coordinated scheduling and/or beamforming. Low centralization, as in the PDCP-RLC split (option 2) only allow slow and basic interference mitigation.

Current radio access networks often lack the resources for centralizing the processing of all their base stations. They are limited by the bandwidth of the fronthaul and midhaul networks connecting their centralized, distributed, and remote units, as well as by the computational capacity of each of these units, and in some cases even by the latency introduced by these fronthaul and midhaul networks. As a result, it is only possible to centralize (fully or partially) a subset of all base stations, resulting in pairs of coordinated (fully or partially) and uncoordinated cells.

Given these limitations, current state-of-the-art approaches propose to dynamically adapt the centralization level of the base station to the network conditions: the number, activity, and geographical distribution of users. For each base station, a functional split is defined so that some of its functions are centralized, and the remaining functions are distributed. This functional split is subject to change dynamically if the network operator detects that it is not optimal anymore, as a result of changes in the network conditions.

Consequently, in a radio access network that dynamically adapts its functional split, the connection quality at the edge between two cells depend on the instantaneous centralization level, so it cannot be known beforehand by the users and/or the UEs. However, for a UE, such as vehicle, it would be very beneficial to know which cell edges provide the best connection quality, so that its trajectory planning can take it into account. Due to dynamic adaptations in the configuration of the radio access network, e. g. changes in the functional split between centralized and distributed units, it is often not possible to know what the best route is ahead of time. Instead, the AGV should retrieve relevant instantaneous information about the network configuration in order to plan its trajectory.

Thus, a mechanism is proposed that enables a UE, e.g., one or more vehicles, to request this information from the network, and/or for the network to respond succinctly yet comprehensively. This information can be then used by a path finding algorithm, e.g., performed by the UE, to determine a path that avoids areas with low-quality connections, e.g., as indicated by a quality of service indicator, which may degrade the service provided and/or required by the vehicle.

It is thus proposed to optimize planning the path of a UE, e.g., an autonomous vehicle, connected to a radio access network considering the functional split option of the one or more base stations of said radio access network. Thus, information about the effect of the functional split of the radio access network, e.g., on a quality of service, such as an interference level, may be requested and/or received in order to influence path planning.

In Figure 1 the functional split options for a mobile radio access network are shown. However, other ((dynamically) and/or (re-)configurable) settings of a base station or other radio network access apparatus governing and/or impacting the QoS, in particular at cell edges may be used. Hence, if desired one or more dynamically reconfigurable parameters of the base stations that impact the QoS indicator at the cell edges, such as the functional split configuration impacting the inter-cell interference may be considered.

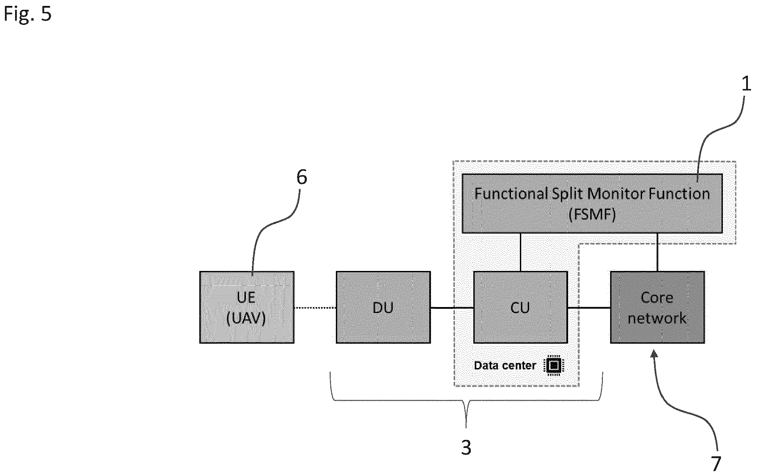

A radio access network, RAN, comprising multiple base stations, which are connected to an external data network via a core network may be provided. Each base station may be split into at least two units: a centralized unit, CU, and a distributed unit, DU. The RAN functions deployed at either DU or CU are not fixed, but the operator can change the functional split at will, according to the instantaneous network conditions so as to modify the overall centralization level of each base station. Further divisions in the protocol stack are possible, for instance to introduce a remote unit, RU. The CU is connected to the core network, which in turns connects the one or more base station to the external data network (such as the internet), e.g., shown in Figure 5.

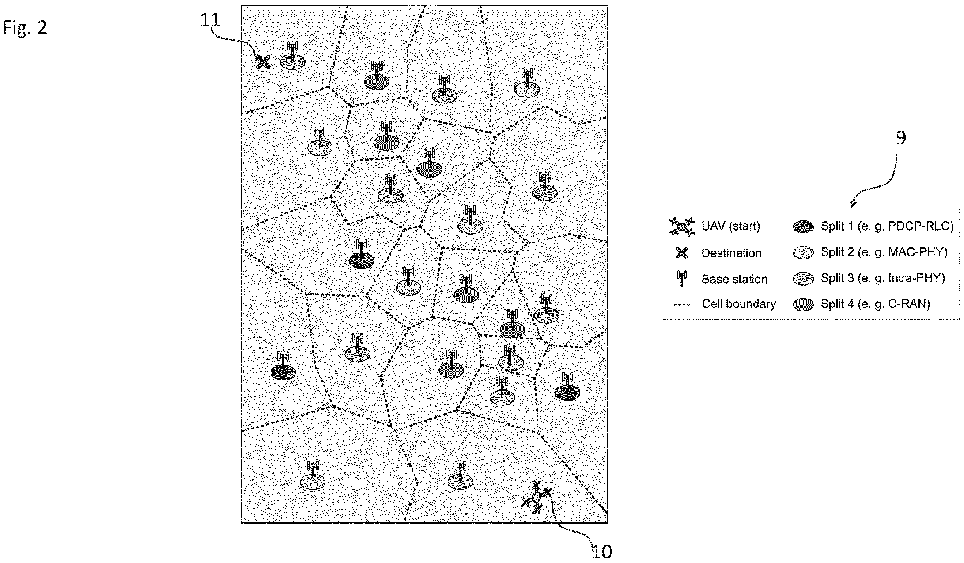

Figure 2 illustrates a coverage area of a radio access network implementing different functional split options and an user equipment, UE. Each base station serves one or more cells, which are spatially separated but border each other at the cell edges, where inter-cell interference is especially noticeable. Frequency reuse is such that neighboring cells may experience collisions in their used time-frequency resources. The functional split, and hence the centralization level, influences the interference mitigation capabilities for each pair of base stations since it affects the effectiveness of the coordination between base stations. That is, base stations whose lower layers are centralized are able to implement advanced techniques such as coordinated transmission or reception, which is frequently not possible between base stations with predominantly distributed functions.

The radio access network provides uplink and downlink connectivity to one or more UEs, such as one or more vehicles. These UEs can move from one point to another as needed by its operator. When moving, UEs, such as vehicles, may require minimum levels of certain connection performance indicators, i.e., quality of service indicators, such as minimum or average data rate, maximum latency, packet loss probability, etc. These indicators are affected by the signal power and signal-to-interference-and-noise ratio (SINR) associated to each location, which are in turn affected by the centralization levels of neighboring base stations.

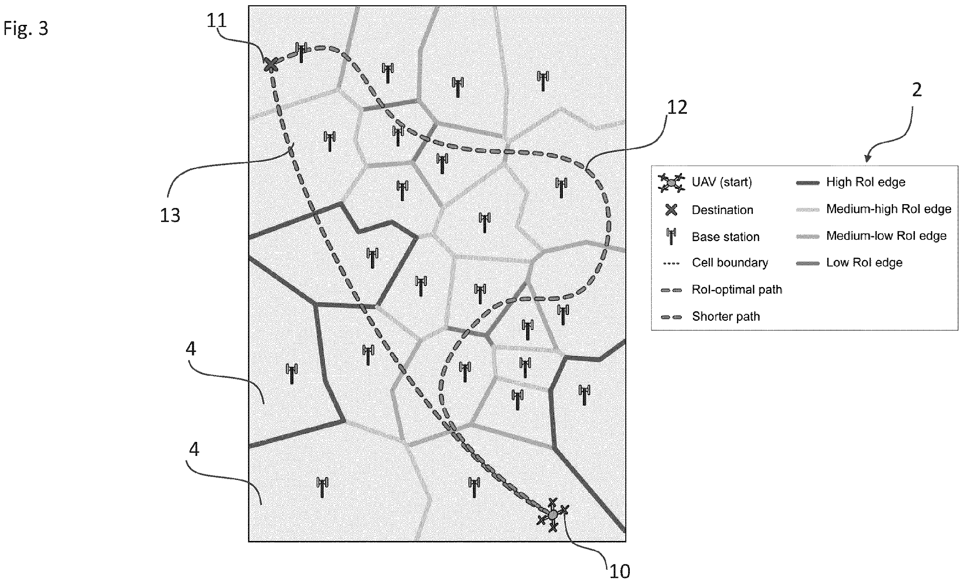

Figure 3 illustrates of a path calculated by the UE based on a plurality of service indicators at the cell edges. Therein a UE may determine a path based on network-side information. An optimal path that the UE follows, based-on such network-side information, may be longer than an actually shorter path (depicted as an orange dashed line in Figure 3). The UE may use one or more QoS indicators and/or their respective values to compute the optimal path, i.e., a path that features the best combination of QoS, such as connection quality, cell load, regulatory constraints, time of flight, energy consumption, obstacle avoidance, etc. The path of the UE may start at its current location, also referred to as origin, and may end at its destination. In between the origin and the destination different paths are possible. It is proposed herein to calculate a path for the UE based on the QoS indicator and/or the respective values, e.g., at the cell edges, which minimizes the crossing over cell edges with lower QoS indicator values, or a high interference risk. Such an optimal path is depicted in Figure 3 and is compared to a possibly shorter path that the vehicle with no such QoS information would travel.

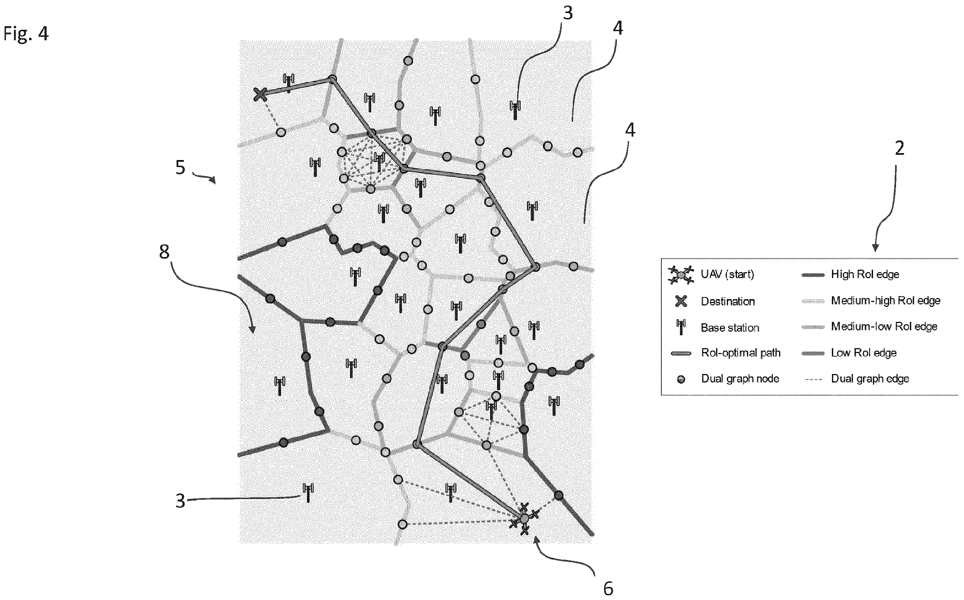

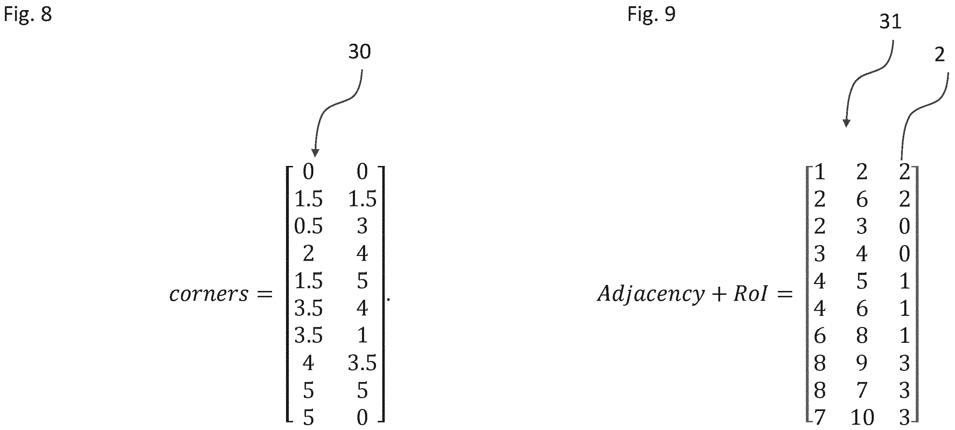

Figure 4 illustrates of a path calculated in a radio access network based on a path finding algorithm. A path finding algorithm, such as Dijkstra or A* search, may be used to find the path with the lowest accumulated risk of interference, RoI, or with the lowest combination of accumulated RoI and other metric, such as distance, curvature, etc. To that end, the UE can convert the received QoS indicator, such as Adjacency+RoI matrix as shown in Figure 9, into a dual graph, whose nodes are the midpoints of each edge in the Adjacency matrix and the edges connect those nodes that are at the edge of the same cell. In addition, each point as an associated RoI value, which is the RoI of the corresponding edge of the primal graph as indicated in the Adjacency+RoI matrix. In addition, the dual graph contains one node at the initial position of the UE and another one at the destination, and the required edges to connect both these nodes to all the dual nodes (midpoints of primal edges) of the cell they are in. Once this dual graph is constructed, finding the path of lowest accumulated RoI is a matter of applying a shortest-path finding algorithm (such as Dijkstra or A*) to the dual graph, where the "distance" associated with each dual edge is the RoI corresponding to the end node, or a combination of RoI and other cost or distance metrics. As shown in Figure 4, similar to Figure 3, the nodes of the dual graphs at the midpoints of the primal edges have been illustrated. These nodes are colored according to their corresponding RoI value. Only a subset of the dual edges are shown (grey dashed lines), for the sake of clarity. The result of the path finding algorithm is a path that goes from the initial position to the destination embedded on the dual graph.

Thus, an example of a considered region in a radio access network implementing four (different) functional split options and an UE, such as an unmanned aerial vehicle (UAV), that intends to traverse it, e.g., alongside the dual graph used by the path finding algorithm, i.e. an interference-aware path finding algorithm, is provided. Again, instead of an UAV any other UE may be used.

As shown in Figure 5, in addition to already existing function and/or units, a separate Functional Split Monitor Function, FSMF, also denoted as radio access network monitoring function in the general case, or network monitoring function etc., which keeps track of changes in the centralization level (functional split) of all base stations, and performs the required calculations required to inform the UE about the current RAN state. This FSMF can be collocated with the CU and/or the core network, or it can be separately deployed at a location that has access to the updated state of all base stations. As such the network monitoring function may be deployed in a data center, e.g., comprising one or more processors and memory, together or separate from the CU.

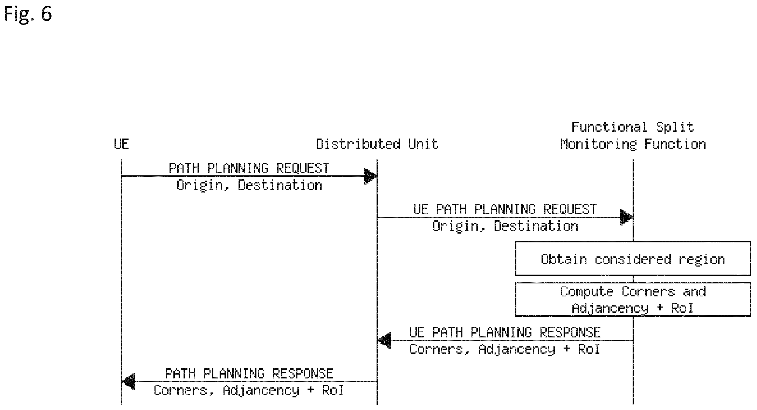

Figure 6 illustrates a message sequence between a UE, a distributed unit and the radio access network monitoring function. Therein, a UE, such as a vehicle, is connected to, e.g., a base station of, the radio network and uses it to communicate, e.g., for streaming video, recording sensor data, etc. At some point, caused by manual or automatic input, the UE needs to move from its current location (origin) to a destination. This is the first step in Figure 6, where a path planning request, e.g., comprising origin and/or destination, is transmitted from the UE to the DU. It is supposed that origin and destination are distant enough such that one or more cell edges will be crossed when moving, thus requiring one or more handovers to be performed perform, e.g., between base stations serving adjacent cells.

Thus, before calculating a path, the UE sends a PATH PLANNING REQUEST message to the distributed unit, DU, indicating, e.g., the geographical coordinates of its current position and/or its destination.

The DU receives the message and may forwards it to the functional split monitoring function, FSMF, given here as an exemplary embodiment of a radio access network monitoring function, via the CU, for example, by encapsulating it into a UE PATH PLANNING REQUEST. The UE PATH PLANNING REQUEST may include additional information about the UE, such as RNTI, UE capabilities, etc. This is the second step in Figure 6.

If the CU is collocated with the FSMF and thus has information about the centralization level of the base stations serving the cells involved in the area containing the origin and destination, it processes the request itself. Otherwise, it may forward the UE PATH PLANNING REQUEST to the core network or to the corresponding entity hosting the FSMF.

In any case, the FSMF may request and/or receive the desired information about the functional split employed in the base stations serving the one or more cells of the RAN, e.g., from the individual base stations or some other data repository comprising the information about the functional split.

Based on the origin and destination (coordinates), the FSMF computes a considered region (of course with in the coverage area of the radio access network) containing both points. This considered region should contain all reasonably possible paths between origin and destination. For instance, this region can be the circle whose center is the midpoint between origin and destination and whose diameter is the distance between origin and destination plus an additional margin. This is the third step in Figure 6 depicted in the upper rectangle.

The FSMF may then retrieve, e.g., an array comprising, the centralization levels (information about the functional split) of the base stations serving the cells fully or partially covered by the considered area (e.g., 50 m), as e.g., illustrated in Figures 2, 3 and 4.

The FSMF may maintain, e.g., in a database, the approximate cell boundaries of the radio access network it manages. These cell boundaries can be modeled as a polygonal line, whose corners are stored as 2D (or 3D) coordinates and their connections are represented by and adjacency matrix, adjacency list, incidence matrix, or other alternative graph representation.

The FSMF may retrieve the set of corners of cell boundaries as, e.g., shown in Figure 8, that are contained within the considered region in a data repository, i.e., a memory.

For each edge in the cell boundary graph, the FSMF retrieves the pairs of base stations whose cells are separated by that edge. If they are different base stations, the FSMF compares its centralization level and assigns a Risk of Interference (RoI) value to the edge associated with the lowest centralization level of both cells. This is the fourth step in Figure 6 depicted in the lower rectangle.

This RoI may be an integer value within a convenient range (such as 0 to 7), and can be calculated as a direct reescalation of the centralization level, as a function of the expected degradation in the SINR, maximum data rate, etc. It should be understood, that instead or in addition to the interference indicator (value(s)), RoI, one or more other quality of service indicator (value(s)) may be used. Hence, the same applies for the FSMF which may be a network monitoring function, in general, for determining the one or more QoS indicators and/or their respective values.

From the retrieved information, the FSMF composes a UE PATH PLANNING RESPONSE message containing one or more information fields, e.g., the two information fields, as shown in Figures 8 and 9. Firstly, the (UE) PATH PLANNIGN RESPONSE may include *Corners,* i.e., a matrix or list of coordinates corresponding to relevant corners of cell boundaries, as shown in Figure 8. Secondly, as shown in Figure 9, it may include *Adjacency* + *Rol,* an adjacency list of the corners of each edge together with the RoI value of that edge. This information can be also structured as a matrix. An example of the values of *Corners* and *Adjacency* + *Rol* for the cell boundaries depicted in Figures 8 and 9.

Then, the UE PATH PLANNING RESPONSE is sent by the FSMF, decapsulated at the DU and forwarded to the vehicle as a PATH PLANNING RESPONSE message, as shown in Figure 6.

The UE may then parse the received response and may use the RoI to compute the optimal path that features the best combination of RoI, connection quality, cell load, regulatory constraints, time of flight, energy consumption, and/or obstacle avoidance, etc. State-of-the-art path finding algorithms can be straightforwardly used for this, such as the A* algorithm. Crossing a cell boundary with a high RoI should be interpreted by the path finding algorithm as a costly step. Nonetheless, the overall optimal path may not necessarily be optimal in terms of RoI, as multiple other objectives and constraint may be present.

A depiction of a RoI-optimal path that the UE may determine is shown in Figures 3 and 4. Without RoI information, the UE may have preferred a shorter path (depicted as an orange dashed line in Figure 3) that crosses cell edges of uncoordinated base stations, which may result in low-quality connections. The optimal path prefers traversing between neighboring, centralized base stations, at the expense of possibly longer travelling times, comprising driving or flying times.

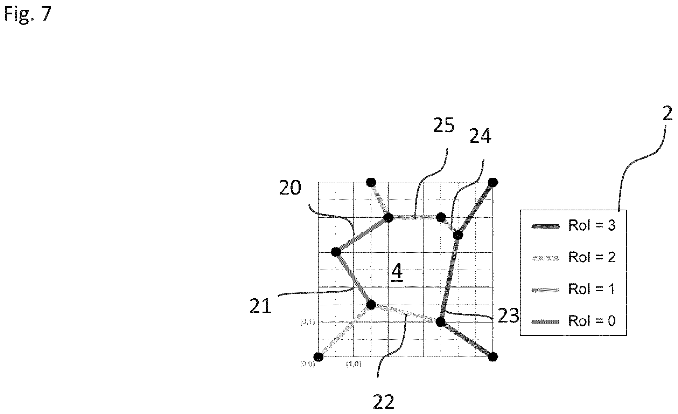

Figure 7 illustrates cell boundaries modeled as polygonal lines, i.e., resulting in a polygonal mesh. The coverage area of a radio access network is split into a plurality of cells, each equipped with a single base station that serves the one or more UEs within the cell. As the cells become increasingly denser, the inter-cell interference becomes a major performance bottleneck. It is thus desired to mitigate the effects of such inter cell interference. In the exemplary mesh shown, the cell boundaries are modeled as polygonal lines, wherein each black dot represents a corner, whereas the color of the edges 20, 21, 22, 23, 24, 25 represents the value of the RoI at and/or near that edge.

Figure 8 illustrates a content of a path planning response message. The first column in "Corners" represents the X dimension, whereas the second column represents the Y dimension .

Figure 9 illustrates further contents of a path planning response message. The first two columns in Adjacency+RoI represent the indices of the connected corners, whereas the third column represents the RoI value of the corresponding edge:

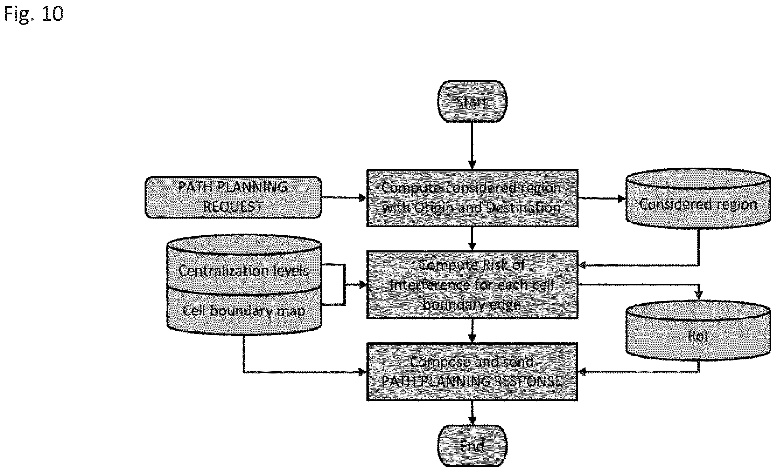

Figure 10 illustrates a flow diagram of the operation of the radio access network monitoring function. The network side tasks (shown in the blue rectangles in Figure 10) starts (after receiving a path planning request from a UE) with the computation of a considered region based on the origin and destination of the UE. Thereupon the considered region may be stored, e.g., to be used for later steps. Then the network monitoring function may compute the risk of interference for each cell boundary. To that end, the considered region may be obtained as well as the centralization levels for the respective base stations and the cell boundary map. As a result the risk of interference may be stored for each cell boundary.

Subsequently a (UE) APTH PLANNING RESPONSE may be composed comprising the relevant (parts of the) cell boundary map and the risk of interference as previously computed. The network monitoring function may then end, e.g., until is called again by a PATH PLANNING REQUEST from the same or another UE.

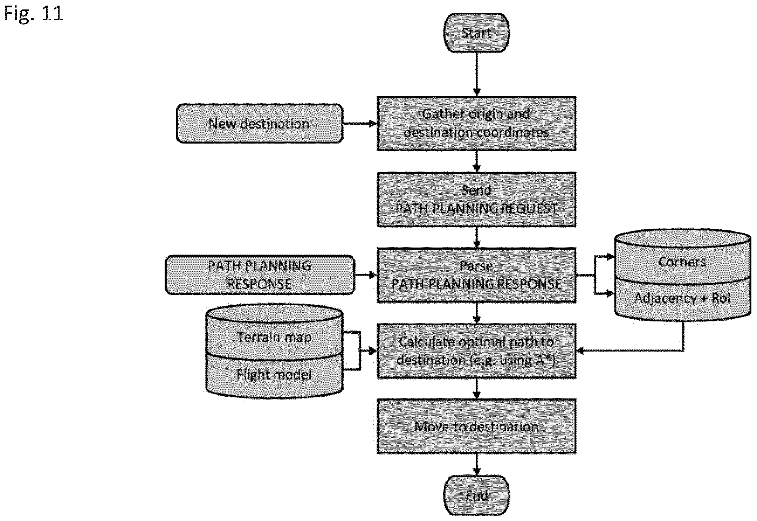

Figure 11 illustrates a flow diagram of the operation of the UE for determining a path. The UE operation may start by obtaining a new destination for the UE to move to. The UE may then gather its origin and destination coordinates. Subsequently the UE may send a PATH PLANNING REQUEST to the radio access network, e.g., to a base station serving the UE. The UE may then obtain a PATH PLANNING RESPONSE which it parses for the information expected, e.g., in the information fields 30, 31 described in herein for example with respect Figures 8 and 9. The data comprised in the Corners 30 and Adjacent +RoI 31 data fields may be stored in a locale memory of the UE. Subsequently the UE may compute a path to its destination, e.g., based on a path finding algorithm, as for example described herein. To that end the UE may make use of a terrain map and/or a flight model also stored locally on the UE. Based on the network-side information, e.g., the QoS indicators and /or respective values the UE may then move along the calculated path to its destination. The UE may then its path finding tasks, e.g., until a new destination is obtained. It should be understood that instead of the UE doing the steps as outlined herein, the path finding algorithm or path calculation may also be performed by the radio access network, e.g., at a base station, in particular by a centralized unit and/or the core network. In such a case the computed path is sent to the UE. The UE may then move along the (pre-)computed path it received.

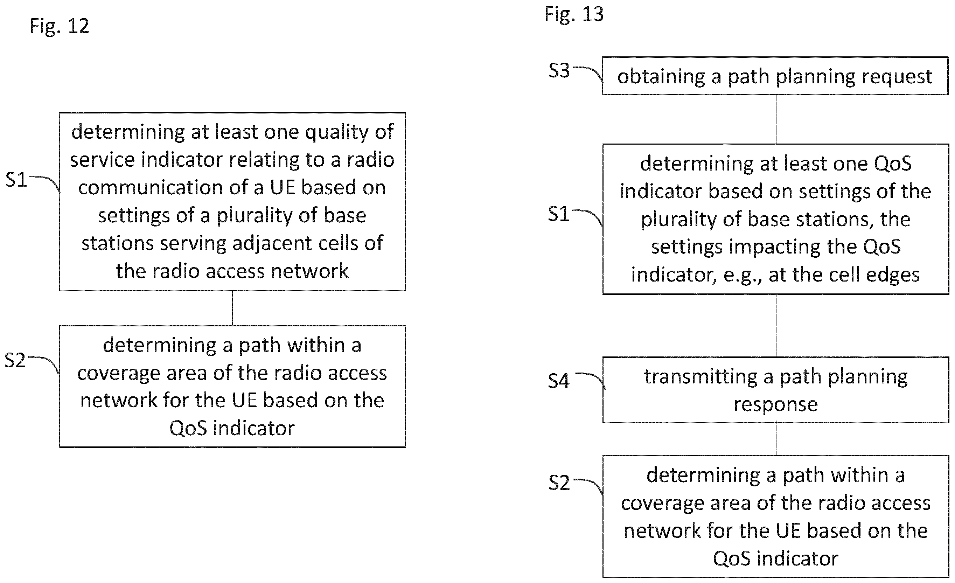

Figures 12 to 20 illustrate exemplary method steps according to the present disclosure.

A method of path planning for a user equipment may comprise in a step S1 determining, e.g., by a radio access network monitoring function, at least one quality of service, QoS, indicator relating to a radio communication of the UE, preferably an interference indicator, based on settings of a plurality of base stations serving adjacent cells of the radio access network, e.g., along a possible path of the UE within a coverage area of the radio access network.

The radio access network monitoring function is preferably implemented in software, i.e., program code, and/or executed, e.g., on a general purpose computer or special purpose computer such a centralized unit. The radio access network monitoring function may be a separate function or may be included in the functionality of the centralized unit or the base station in general or even the core network. The quality of service, QoS, indicator may comprise a plurality of values, e.g., on a given discrete or continuous scale, and may therefore serve for identifying the QoS of a radio communication of the UE. In particular the QoS indicator relates to the and/or identifies the radio communication of the UE, such as signal strength, interference or the like. The quality of service and/or the QoS indicator may relate to the packet error rate and/or the number of packet re-transmission, e.g., necessary for successfully decoding the data packets. A further QoS (indicator) may be the data rate and/or the minimal data rate necessary for the radio connection of the UE.

The QoS indicator may in particular be an interference indicator that represents a risk of interference or estimated interference for example at cell edges. To that end, one or more settings, such as coding parameters and/or functional split information, of the one or more or a plurality of base stations serving adjacent cells may be obtained and used for calculating said QoS indicator. In a particular a possible path of the UE within a coverage are of the radio access network is determined based on a considered region, as previously described. Hence, a method of providing network-side information for being used in path planning is proposed.

In a step S2, a path within a coverage area of the radio access network for the UE based on the QoS indicator is determined. As mentioned before the coverage area may first be limited to a considered region. A path finding algorithm may be performed by the UE or the base station, e.g., the CU or the core network. As a result, a path for the UE to follow may be obtained. The path finding algorithm may use the QoS indicator, as previously determined, to determine an (optimized) path for the UE to follow, e.g., to is destination.

As shown in Figure 13, a path planning request may be received, e.g., by a base station of the radio access network, for example from a UE that needs to travel to a new destination. Said request may comprise origin and/or destination of the UE. Subsequently step s1 may be performed by the network-side, e.g., base station and/or core network. Thereupon, the base station serving the UE may transmit a path planning response (message) comprising the QoS indicator(s) and/or respective values to the UE. In a step S2 the UE may then determine a path within a coverage area of the radio access network for the UE based on the QoS indicator received.

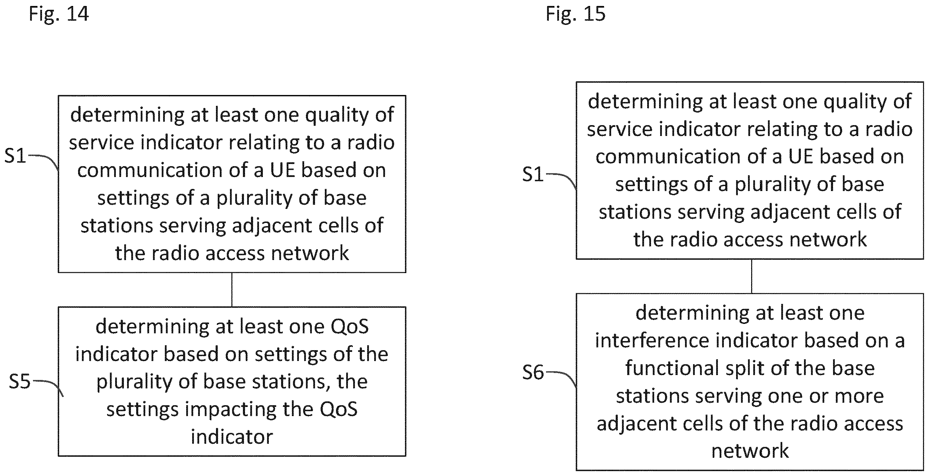

As shown in Figure 14, a step S1 can be performed as before for determining a QoS indicator. Step S1 may comprise a step S5, or may replaced by said step S5. Step S5 may determine at least one QoS indicator based on settings of the plurality of base stations, the settings impacting the QoS indicator. As mentioned, such base station settings (also known as parameters or configurations), such as coding schemes and/or functional split, may impact the radio communication of the UE at a cell edges or boundaries. Thus, based on such settings the QoS indicator (value(s)) may be determined, e.g., based on calculation, experience, measurements, and/or estimation.

Turning to Figure 15, again, a step S1 can be performed as before for determining a QoS indicator. Step S1 may comprise a step S6, or may replaced by said step S6. Step S6 may determine at least one interference indicator based on a functional split of the base stations serving one or more adjacent cells of the radio access network.

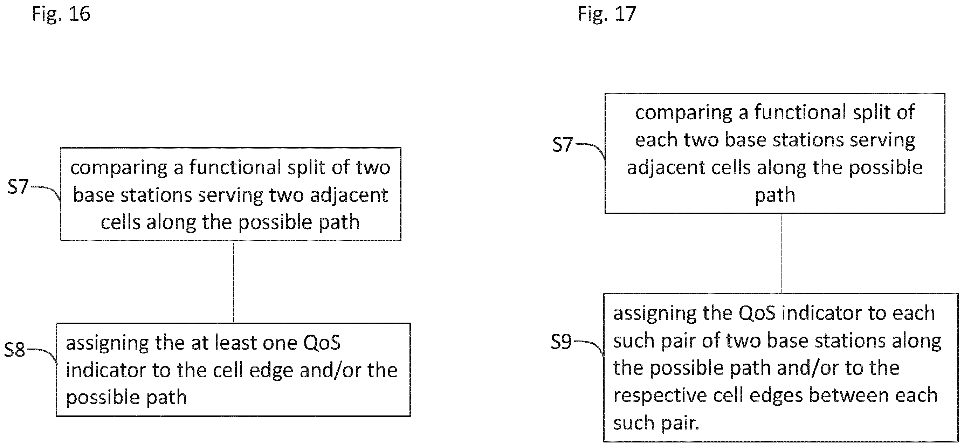

Turning to Figure 16, in a step S7, a functional split of two base stations serving two adjacent cells, e.g., along a possible path (of the UE), may be compared. Here, the considered region may determine the one or more possible paths. The possible paths may cross a number of cells and/or cell edges. For these cells, the function split of the base stations serving these cell is considered and compared to each other. As a result, a QoS indicator (value) for the cell edge or cell boundary may be obtained. For example, the QoS indicator may be high (and thus indicate a good radio communication of the UE) in case the base stations serving adjacent cells are well centralized and have the same functional split. In contrast, the QoS indicator (value) may be low in case the base stations are not well centralized and/or do not have the same functional split. In general, the QoS indicator may thus be dependent on the settings of the base stations serving adjacent cells.

Thus, in a step S8, the at least one QoS indicator (value) is assigned to the cell edge and/or the possible path. The possible path then be evaluated based on the accumulated, i.e., added QoS indicators, along the path comprising/crossing one or more cell edges. Of course, a cell may comprise multiple edges, i.e. may border to more than one adjacent cell. In that case a respective QoS indicator is assigned to the respective cell edge, wherein the respective QoS indicator (value) is determined based on the base station settings of the base stations serving the adjacent cells of the respective cell edge.

Turning to Figure 17, again step S7 is performed and subsequently a step S9 may be performed, wherein in step S9 the QoS indicator is assigned to each such pair of two base stations along the possible path and/or to the respective cell edges between each such pair. The assignment may comprise storing and linking the relevant information in a database, e.g., a non-transitory medium such as a (non-volatile) memory.

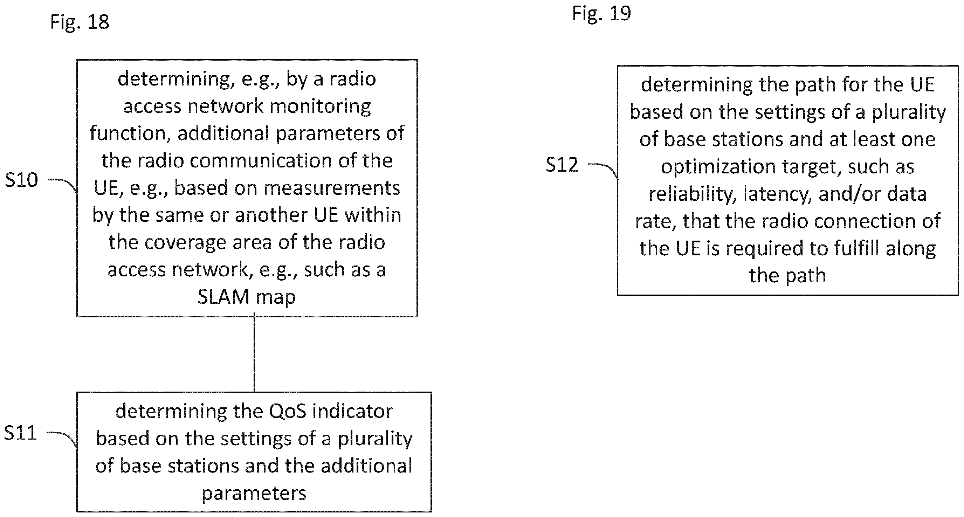

Turning to Figure 18, in a step S10, additional parameters, e.g., such as a SLAM map, of the radio communication of the UE, e.g., based on measurements by the same or another UE within the coverage area of the radio access network, may be determined, e.g., by a radio access network monitoring function. The network monitoring function may obtain the additional parameters from a database as just described. The simultaneous localization and mapping, SLAM, map may be determined by the one or more UEs within the coverage area and/or the considered region of the radio access network.

In a subsequent step S11, the QoS indicator may be determined based on the settings of a plurality of base stations and these additional parameters. Thus, in order to arrive at a (optimized) path for the UE the optimization may take into account several requirements. Hence, path planning algorithm may consider and/or required these requirements in order to provide the (optimal) path for the UE.

Turning to Figure 19, in a step S12, the path for the UE is determined based on the settings of a plurality of base stations and at least one optimization target, such as reliability, latency, and/or data rate, that the radio connection of the UE is required to fulfill along the path.

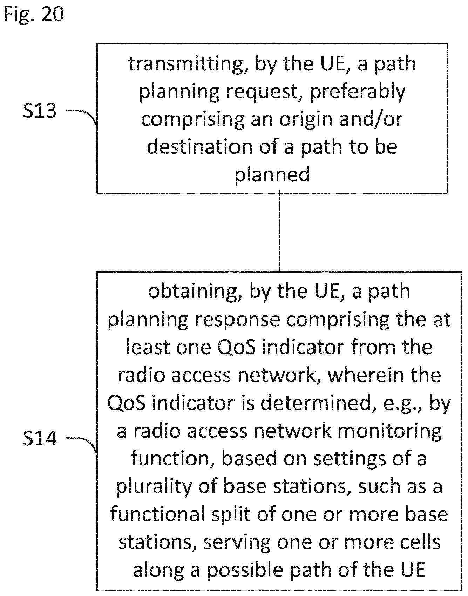

Turning to Figure 20, in a step S13, a path planning request, preferably comprising an origin and/or destination of a path to be planned is transmitted by the UE. In a subsequent step S14, a path planning response comprising the at least one QoS indicator from the radio access network, wherein the QoS indicator is determined, e.g., by a radio access network monitoring function, based on settings of a plurality of base stations, such as a functional split of one or more base stations, serving one or more cells along a possible path of the UE is obtained by the UE. As mentioned, the proposed embodiments, provide network-side information for being used in path planning.

The embodiments proposed herein improve and/or optimize the path planning for UEs, which up to now do not take into account the influence of the functional split present in the serving base stations on the interference at the cell edges. The known path planning algorithms fail to prefer areas with low-interference cell edges instead of high-interference ones, since such information is not known to them. The presented solution allows UEs to select low-interference paths or paths having sufficient QoS levels as indicated by the one or more QoS indicators, for example at cell edge.

Hitherto, dynamically centralized RANs do not include a way to communicate their state, directly or indirectly, to UEs that could benefit from knowing the expected regions with high risk of interference. The proposed solution allows the RAN to succinctly inform the UEs about the best cell edges to traverse in order to avoid interference without disclosing detailed information about the cell state.

Known strategies that jointly optimize a UE's path and the behavior of the base station (e. g. beamforming) rely on the base station to actively modify its transmission, which not only implies a careful synchronization with the UE's actions but also requires a non-negligible amount of resources dedicated to following the UE. In the present solution, a base station informs the UE (just) once about of the instantaneous network situation, and the UE oversees selecting the (optimal) path. This may considerably reduce the overhead at the network side

It is thus proposed to specify a messaging procedure that results in the base station communicating the location of the cell edges and/or the QoS indicators, such as interference levels. As a result, a possibly longer path or trajectory of a UE between two points resulting in a signal-to-interference ratio higher than the one of comparatively shorter path may be obtained. To that end, the interference level or another QoS indicator representative of the radio communication at cell edges may be used. Thereby, a UE following a path or trajectory between two points that traverses base stations prone to feature a centralized split, e.g., due to their proximity, low frequency reuse factor, being at usually active areas, etc., instead of another path one crossing cell edges between base stations with a probably distributed functional split may be obtained due to the information about the centralization state of the whole RAN, as propose herein.

## Claims

1. A method of path planning for a user equipment, UE (6), preferably an automated guided vehicle, comprising the steps of:
determining, e.g., by a radio access network monitoring function (1), at least one quality of service, QoS, indicator (2) relating to a radio communication of the UE, preferably an interference indicator, based on settings of a plurality of base stations (3) serving adjacent cells (4) of the radio access network (5), e.g., along a possible path of the UE (6) within a coverage area of the radio access network, and
determining, e.g., by a path planning function in the UE (6) and/or operatively coupled to the radio access network (5) and/or a core network (7), a path within a coverage area of the radio access network for the UE (6) based on the QoS indicator (2).

2. The method according to the preceding claim, wherein the step of determining a QoS indicator
(2) comprises: determining at least one QoS indicator (2) based on settings of the plurality of base stations (3), the settings impacting the QoS indicator (2), e.g., at the cell edges (20-25).

3. The method according to any one of the preceding claims, wherein the step of determining a QoS
Indicator (2) comprises: determining at least one interference indicator based on a functional split (9) of the base stations (3) serving one or more adjacent cells (4) of the radio access network (5).

4. The method according to any one of the preceding claims, further comprising the step of:
obtaining, by the radio access network (5), a path planning request, e.g., from the UE, preferably comprising an origin (10) and/or destination (11) of a path (12, 13) to be planned.

5. The method according to any one of the preceding claims, further comprising the step of:
comparing a functional split (9) of two base stations (3) serving two adjacent cells (4) along the possible path (12, 13), and assigning the at least one QoS indicator (2) to the cell edge and/or the possible path (12, 13).

6. The method according to any one of the preceding claims, further comprising the step of:
comparing a functional split (9) of each two base stations (3) serving adjacent cells (4) along the possible path (12, 13), and assigning the QoS indicator (2) to each such pair of two base stations (3) along the possible path (12, 13) and/or
to the respective cell edges (20-25) between each such pair of base stations (3).

7. The method according to any one of the preceding claims, further comprising the step of:
transmitting, by the radio access network (5), a path planning response to the UE, e.g., as a NAS or RRC message, comprising the at least one QoS indicator (2) and/or path information relating to the path.

8. The method according to any one of the preceding claims further comprising
determining the path (12, 13) for the UE (6) based on the plurality of QoS indicators (2) associated with each pair of base stations (3) along the possible path (12, 13) and/or to the respective cell edges between each such pair (3).

9. The method according to any one of the preceding claims further comprising:
determining, e.g., by a radio access network monitoring function (1), additional parameters of the radio communication of the UE, e.g., based on measurements by the same or another UE (6) within the coverage area (8) of the radio access network (5), e.g., such as a SLAM map, and
determining the QoS indicator (2) based on the settings of a plurality of base stations (3) and the additional parameters.

10. The method according to any one of the preceding claims further comprising:
determining the path (12, 13) for the UE (6) based on the settings of a plurality of base stations (3) and at least one optimization target, such as reliability, latency, and/or data rate, that the radio connection of the UE (6) is required to fulfill along the path (12, 13).

11. A radio access network apparatus (3, DU, CU) operative to perform the method steps according to any one of the preceding claims.

12. A method of path planning for a user equipment (6), UE, preferably an automated guided vehicle, comprising the step of:
obtaining, by the UE (6), a path planning response comprising the at least one QoS indicator (2) from the radio access network (5), wherein the QoS indicator (2) is determined, e.g., by a radio access network monitoring function (1), based on settings of a plurality of base stations (3), such as a functional split (9) of one or more base stations (3), serving one or more cells (4) along a possible path (12, 13) of the UE (6).

13. The method according to the preceding claim further comprising:
transmitting, by the UE (5), a path planning request, preferably comprising an origin (10) and/or destination (11) of a path (12, 13) to be planned.

14. A user equipment (6), UE, operative to perform the method steps according to any one of the claims 12 or 13.

15. A system comprising a radio access network apparatus (3) according to claim 11 and a user equipment (6) according to claim 14.

16. A computer program, preferably stored on a non-transitory medium, that comprises program code that when executed performs the method steps of any one of the claims 1-10 and 12-13, respectively.
